# EUROPEAN PATENT APPLICATION

(11) **EP 4 617 674 A1**
(43) Date of publication of application: **17.09.2025**
(21) Application number: 23888605.5
(22) Date of filing: 02.11.2023
(51) Int. Cl.: G01N 35/10, G01N 30/72

(54) **AUTOMATED ANALYSIS DEVICE**

(30) Priority: 08.11.2022 JP 2022178577
(71) Applicant: HITACHI HIGH-TECH CORPORATION, Tokyo 105-6409 (JP); Roche Diagnostics GmbH, 68305 Mannheim (DE)
(72) Inventor: NISHIKI Kenichiro, Tokyo 105-6409 (JP); ITO Takumi, Tokyo 105-6409 (JP); ITO Shinya, Tokyo 105-6409 (JP); KUPSER Peter, 68305 Mannheim (DE); VAN DOORN Aart Pieter, 68305 Mannheim (DE)
(74) Representative: Strehl & Partner mbB
(86) International application number: PCT/JP2023/039540
(87) International publication number: WO 2024/101257

(57) **Abstract**

The subject disclosure has as its object the facilitation of management of a liquid to be supplied to individual treatment sections in an automatic analyzer (1) having two or more treatment sections. The automatic analyzer according to the subject disclosure includes a first container (131) that contains a first liquid, and the first container is configured such that the first liquid can be supplied to each of a first treatment section (11) and a second treatment section (12), by connection of the first container to each of the first treatment section and the second treatment section.

## Description

### Technical Field

The subject disclosure relates to an automatic analyzer for analyzing a sample.

### Background Art

A liquid chromatography-mass spectrometer (LS-MS) generally has a pretreatment section and an analysis section. As a typical pretreatment, the pretreatment section adds a solvent to a sample. The analysis section performs a mass analysis after separation of the sample. In general, the pretreatment section and the analysis section are configured as devices independent from each other, or are configured to be internally discrete even if they are integrally configured.

Addressed to the problem of "providing a blood analyzer, which can accurately measure concentrations of both glucose and glycosylated hemoglobin, advantageously in cost without increase in physical size, and also providing a blood analyzer capable of reducing user operation and maintenance burden," Patent Document 1 describes a technology that "A blood analyzer X is configured to perform concentration measurements of glucose and glycosylated hemoglobin by single sampling of blood 13. Preferably, the blood analyzer X is configured to perform sample preparations for the concentration measurements of glucose and glycosylated hemoglobin at the same time by one sample preparation. The blood analyzer X may be configured to perform dilution of a blood sample for the measurement of glycosylated hemoglobin and dilution of a blood sample for the measurement of glucose by use of the same diluent" (see the abstract).

### Prior Art Document

### Patent Document

Patent Document 1: JP-2014-095715-A

### Summary of the Invention

### Problem to be Solved by the Invention

As the pretreatment section and the analysis section are independent from each other, flow paths for supplying a solvent from a solvent storage section to these devices are individually configured for each supply destination device. Due to this, the solvent stored in the solvent storage section is individually managed for each corresponding supply destination device. Even when the same solvent is supplied to the pretreatment section and the analysis section, for example, a container, in which the solvent to be supplied to the pretreatment section is contained, and another container, in which the solvent to be supplied to the analysis section is contained, are both disposed.

If the same solvent is stored in duplicate as mentioned above, the management of the solvent may become irksome. A need may hence arise for interruption of a measurement, for example, merely if the solvent to be supplied to one of the pretreatment section and the analysis section becomes short. In conventional technologies like Patent Document 1, no sufficient consideration has however been made about the problem that arises by storing of a solvent in duplicate for the pretreatment section and the analysis section as mentioned above.

With the foregoing problem in view, the subject disclosure has as an object thereof the facilitation of management of a liquid to be supplied to each one of two or more treatment sections in an automatic analyzer having the two or more treatment sections.

### Means for Solving the Problem

An automatic analyzer according to the subject disclosure includes a first container that contains a first liquid, and the first container is configured such that the first liquid can be supplied to each of a first treatment section and a second treatment section, by connection of the first container to each of the first treatment section and the second treatment section.

### Advantages of the Invention

According to the automatic analyzer of the subject disclosure, it is possible to facilitate the measurement of the liquid to be supplied to individual ones of the two or more treatment sections in the automatic analyzer having the two or more treatment sections. Other characteristic features, advantages, configurations, and the like of the subject disclosure will become more apparent by referring to the following detailed description.

### Brief Description of the Drawings

FIG. 1 is a diagram illustrating an overall configuration of an automatic analyzer 1 according to Embodiment 1.
FIG. 2 is a diagram illustrating an overall configuration of an automatic analyzer 1 according to Embodiment 2.

### Modes for Carrying Out the Invention

### <Embodiment 1: System Configuration>

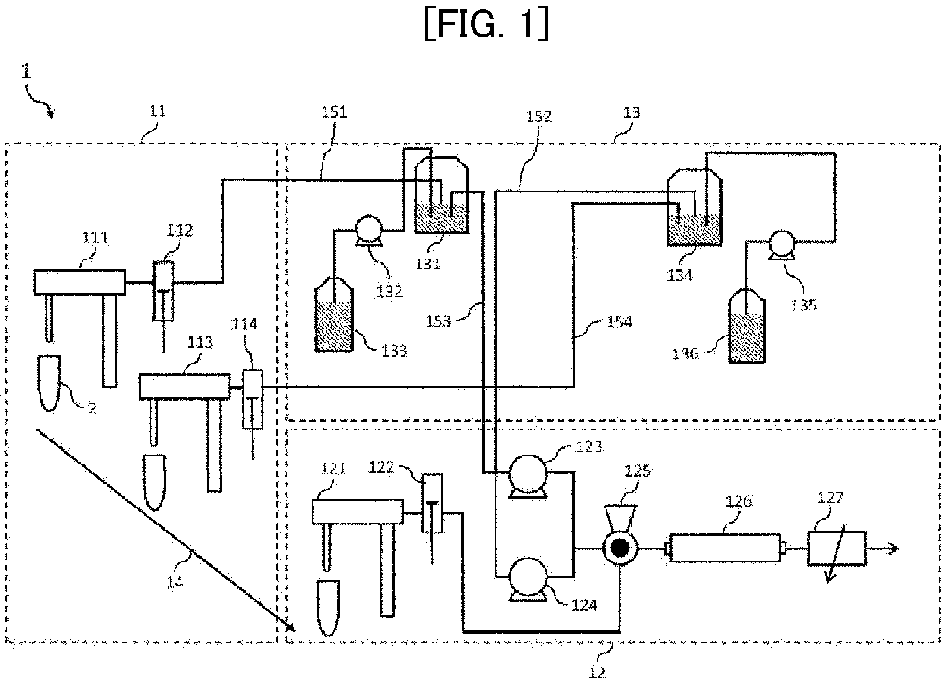

FIG. 1 is a diagram illustrating an overall configuration of an automatic analyzer 1 according to Embodiment 1 of the subject disclosure. The automatic analyzer 1 is a system that analyzes a sample by liquid chromatography, and includes a pretreatment section 11 (first treatment section), an analysis section 12 (second treatment section), a solvent storage section 13, a transport mechanism 14, and flow paths 151, 152, 153, and 154.

The solvent storage section 13 includes a first reservoir 131 (corresponding to a first container in this embodiment), a first auxiliary pump 132, a first solvent bottle 133 (first liquid containing part), a second reservoir 134 (second container), a second auxiliary pump 135, and a second solvent bottle 136. The first solvent bottle 133 contains a first solvent, and the second solvent bottle 136 contains a second solvent. The first solvent and the second solvent may be the same solvent or may be different solvents. The first auxiliary pump 132 draws the first solvent from the first solvent bottle 133 and introduces it into the first reservoir 131. The second auxiliary pump 135 draws the second solvent from the second solvent bottle 136 and introduces it into the second reservoir 134.

When each solvent decreases in amount as it is used, a user needs to replenish the relevant solvent bottle with the solvent or to replace the relevant solvent bottle itself. The first solvent bottle 133 and the second solvent bottle 136 are therefore arranged at positions easily accessible by the user. These positions may not be suited for the automatic analyzer 1 to transport the solvents in the system. In this embodiment, therefore, each reservoir is disposed between the relevant solvent bottle and the supply destination (the pretreatment section 11 and the analysis section 12 in FIG. 1) so that the solvent to be supplied to the supply destination is ensured to be normally stored in the reservoir.

The pretreatment section 11 is a device that performs a pretreatment on the sample. Examples of the pretreatment include a treatment that adds the solvent to a reaction vessel 2 with the sample contained therein. The pretreatment section 11 includes dispensing units 111 and 113, a syringe 112 (first adjustment mechanism), and a syringe 114. The dispensing unit 111 dispenses the first solvent, which has been supplied by the first reservoir 131, into the reaction vessel 2. The syringe 112 draws the first solvent from the first reservoir 131 and supplies it to the dispensing unit 111. The dispensing unit 113 dispenses the second solvent, which has been supplied by the second reservoir 134, into the reaction vessel 2. The syringe 114 draws the second solvent from the second reservoir 134 and supplies it to the dispensing unit 113. In this example, the pretreatment that the pretreatment section 11 performs is to dispense the first solvent and the second solvent into the reaction vessel 2 with the sample contained therein.

The analysis section 12 is configured as an LC-MS, and performs a mass analysis after receiving the sample in the reaction vessel 2 and performing a separation treatment by liquid chromatography. The analysis section 12 includes a sample aspiration unit 121, a syringe 122, a liquid delivery pump 123 (second adjustment mechanism), a liquid delivery pump 124, a sample injection unit 125, a separation column 126, and a detection unit 127. The sample aspiration unit 121 and the syringe 122 aspirate from the reaction vessel 2 the sample pretreated by the pretreatment section 11 and supply it to the sample injection unit 125. The liquid delivery pump 123 draws the first solvent from the first reservoir 131 and supplies it to the sample injection unit 125. The liquid delivery pump 124 draws the second solvent from the second reservoir 134 and supplies it to the sample injection unit 125. The sample injection unit 125 supplies the sample and the respective solvents into the separation column 126. The separation column 126 performs a separation treatment, and the detection unit 127 performs a mass analysis.

The syringe 112, the syringe 114, the liquid delivery pump 123, and the liquid delivery pump 124 can operate independently of one another. The amounts of the solvents to be supplied to the respective treatment sections can therefore be adjusted independently of one another.

The amounts of the respective solvents that the syringes 112 and 114 are to supply to the pretreatment section 11 may be the same as or different from the amounts of the respective solvents that the liquid delivery pumps 123 and 124 are to supply to the analysis section 12. The amount of the first solvent that the syringe 112 is to supply and the amount of the second solvent that the syringe 114 is to supply may be the same as or different from each other. The amount of the first solvent that the liquid delivery pump 123 is to supply and the amount of the second solvent that the liquid delivery pump 124 is to supply may be the same as or different from each other. The amount of the first solvent that the syringe 112 is to supply and the amount of the first solvent that the liquid delivery pump 123 is to supply may be the same as or different from each other. The amount of the second solvent that the syringe 114 is to supply and the amount of the second solvent that the liquid delivery pump 124 is to supply may be the same as or different from each other. That is, the respective amounts of the first solvent and second solvent that the pretreatment section 11 is to use and the respective amounts of the first solvent and second solvent that the analysis section 12 is to use may be the same as or different from each other. These liquid amounts can individually be adjusted according to an item to be analyzed, kinds of individual liquids, and the like.

Along the individual treatment steps in the pretreatment section 11, the transport mechanism 14 transports the reaction vessel 2 in an order of (a) a position where the dispensing unit 111 can access the reaction vessel 2, (b) a position where the dispensing unit 113 can access the reaction vessel 2, and (c) a position where the sample aspiration unit 121 can access the reaction vessel 2. the reaction vessel 2 is moved to the position (a) when the dispensing unit 111 dispenses the first solvent into the reaction vessel 2, the reaction vessel 2 is moved to the position (b) when the dispensing unit 113 dispenses the second solvent into the reaction vessel 2, and the reaction vessel 2 is moved to the position (c) when the sample aspiration unit 121 aspirates the sample from the reaction vessel 2.

The flow paths 151 and 153 transport the first solvent from the first reservoir 131 to the respective supply destinations. The flow path 151 connects the first reservoir 131 and the pretreatment section 11 (syringe 112), and the flow path 153 connects the first reservoir 131 and the analysis section 12 (liquid delivery pump 123). The flow paths 152 and 154 transport the second solvent from the second reservoir 134 to the respective supply destinations. The flow path 154 connects the second reservoir 134 and the pretreatment section 11 (syringe 114), and the flow path 152 connects the second reservoir 134 and the analysis section 12 (liquid delivery pump 124).

### <Embodiment 1: Conclusions>

As the first reservoir 131 is connected to each of the pretreatment section 11 and the analysis section 12 in the automatic analyzer 1 according to this Embodiment 1, the first solvent can be supplied to each of the pretreatment section 11 and the analysis section 12. The same applies to the second solvent. This can simplify the solvent management. In a case where one solvent container is arranged for each of the pretreatment section 11 and the analysis section 12, for example, a need arises to stop the analysis treatment if the solvent in any one of the solvent containers becomes short. In this Embodiment 1, by contrast, each solvent is parallelly supplied from the common reservoir to the respective treatment sections, so that such an inconvenience can be suppressed.

In the automatic analyzer 1 according to this Embodiment 1, the first solvent bottle 133 and the second solvent bottle 136 are arranged at positions easily accessible by the user. Each solvent bottle can be arranged, for example, at a relatively low position in the automatic analyzer 1. Each solvent is supplied from the relevant reservoir to the respective treatment sections, and the user does not directly access the reservoirs. No layout restrictions are hence imposed on the positions of the reservoirs. Accordingly, it is possible to relax restrictions on the layout of individual elements of the automatic analyzer 1.

In the automatic analyzer 1 according to this Embodiment 1, each solvent is supplied from the relevant reservoir to the respective treatment sections. Therefore, even while the user is replacing the solvent bottle or is replenishing the solvent bottle with the solvent, the solvent can continuously be supplied from the reservoir to the respective treatment sections. Accordingly, it is unnecessary to stop the measurement operation.

### <Embodiment 2>

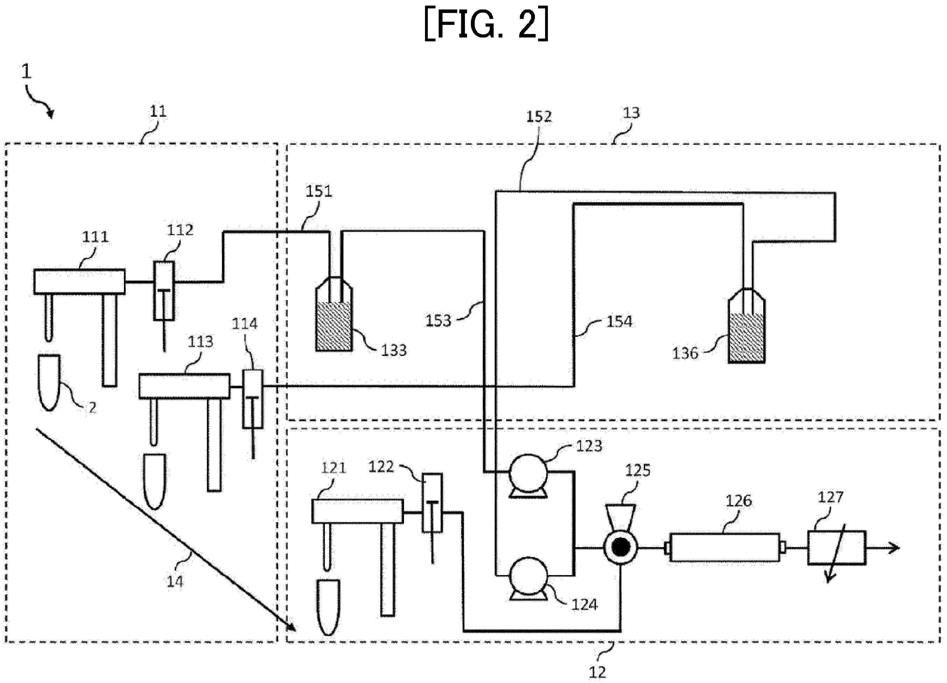

FIG. 2 is a diagram illustrating an overall configuration of an automatic analyzer 1 according to Embodiment 2 of the subject disclosure. Unlike Embodiment 1, there is neither the first reservoir 131 nor the second reservoir 134 in this Embodiment 2. Instead, the first solvent is directly supplied from the first solvent bottle 133 (corresponding to a first container in this embodiment) to the pretreatment section 11 and the analysis section 12, and the second solvent is directly supplied from the second solvent bottle 136 to the pretreatment section 11 and the analysis section 12.

In the configuration of FIG. 2, each solvent is directly supplied from the relevant solvent bottle to the respective treatment sections, so that no reservoir is needed. The configuration of the automatic analyzer 1 can hence be simplified. However, while the user is replacing the solvent bottle or is replenishing the solvent bottle with the solvent, the solvent cannot be supplied to the respective treatment sections. It is therefore necessary to stop the measurement operation.

### <Modifications of the Subject Disclosure>

The subject disclosure is not limited to the above-mentioned embodiments and includes a variety of modifications. For example, the above-mentioned embodiments are described in detail to facilitate understanding of the subject disclosure, and all the described elements are not necessarily required to be included. Further, a part of one embodiment can be replaced to a configuration of another embodiment. Moreover, a configuration of one embodiment can also be added to a configuration of another embodiment. Furthermore, with respect to a part of a configuration of one embodiment, addition, omission or replacement of a part of a configuration of another embodiment can also be made.

In each embodiment above, the description is made of the configuration example in which the automatic analyzer 1 uses the two kinds of solvents (first solvent and second solvent), and the solvent storage section 13 stores these two kinds of solvents. However, the number of the kinds of solvents is not limited to the foregoing, and the subject disclosure can be applied to cases where any number of kinds of solvents are used. In a case where only the first solvent is used, for example, similar advantages as those of the above embodiments can be exhibited by supplying the first solvent from the first reservoir 131 or the first solvent bottle 133 to the respective treatment sections.

### Description of Reference Characters

- 1:: Automatic analyzer
- 11:: Pretreatment section
- 12:: Analysis section
- 13:: Solvent storage section

## Claims

1. An automatic analyzer for analyzing a sample, comprising:
a first container that contains a first liquid;
a first treatment section that performs, with use of the first liquid, a first treatment on the sample in a reaction vessel;
a second treatment section that performs, with use of the first liquid, a second treatment on the sample subjected to the first treatment; and
a transport mechanism that transports the reaction vessel from the first treatment section to the second treatment section, whereby the sample is transferred from the first treatment section to the second treatment section,
wherein the first container is configured such that the first liquid can be supplied to each of the first treatment section and the second treatment section, by connection of the first container to each of the first treatment section and the second treatment section.

2. The automatic analyzer according to claim 1, further comprising:
a first flow path connecting the first container and the first treatment section; and
a second flow path connecting the first container and the second treatment section,
wherein the first container is configured such that the first liquid can be supplied to the first treatment section via the first flow path and the first liquid can also be supplied to the second treatment section via the second flow path.

3. The automatic analyzer according to claim 1, further comprising:
a second container that contains a second liquid,
wherein the first treatment section is configured such that, in the first treatment, the sample is treated using the second liquid after the sample has been treated using the first liquid,
the second treatment section is configured such that, in the second treatment, the sample is treated using the first liquid and the second liquid for the sample,
the transport mechanism transports the reaction vessel from a first position where the first treatment section treats the sample with use of the first liquid to a second position where the first treatment section treats the sample with use of the second liquid, and
the transport mechanism transports the reaction vessel from the second position to the second treatment section.

4. The automatic analyzer according to claim 1, further comprising:
a first adjustment mechanism that adjusts an amount of the first liquid to be supplied to the first treatment section; and
a second adjustment mechanism that adjusts an amount of the first liquid to be supplied to the second treatment section,
wherein the first adjustment mechanism and the second adjustment mechanism individually supply the first liquid from the common first container to the first treatment section and the second treatment section, respectively, by performing an operation to supply the first liquid to the first treatment section and an operation to supply the first liquid to the second treatment section independently of each other.

5. The automatic analyzer according to claim 3, further comprising:
a first adjustment mechanism that adjusts amounts of the first liquid and the second liquid to be supplied to the first treatment section; and
a second adjustment mechanism that adjusts amounts of the first liquid and the second liquid to be supplied to the second treatment section,
wherein, as the amounts of the respective first liquid and second liquid that the first adjustment mechanism and the second adjustment mechanism supply to the first treatment section and the second treatment section,
at least the amount of the first liquid that the first adjustment mechanism supplies to the first treatment section and the amount of the first liquid that the first adjustment mechanism supplies to the second treatment section are different from each other, or
the amount of the second liquid that the first adjustment mechanism supplies to the first treatment section and the amount of the second liquid that the first adjustment mechanism supplies to the second treatment section are different from each other.

6. The automatic analyzer according to claim 1,
wherein the first treatment section is configured as a pretreatment section that, before the second treatment section treats the sample, performs a pretreatment on the sample by dispensing the first liquid into the reaction vessel with the sample contained therein, and
the second treatment section is configured as an analysis section that performs a mass analysis after receiving the sample in the reaction vessel and performing a separation treatment by liquid chromatography.

7. The automatic analyzer according to claim 4,
wherein the first treatment section is configured as a pretreatment section that, before the second treatment section treats the sample, performs a pretreatment on the sample by dispensing the first liquid into the reaction vessel with the sample contained therein,
the second treatment section is configured as an analysis section that performs a mass analysis after receiving the sample in the reaction vessel and performing a separation treatment by liquid chromatography,
the first adjustment mechanism adjusts the amount of the first liquid to be supplied to the first treatment section for dispensation by the first treatment section into the reaction vessel, and
the second adjustment mechanism adjusts the amount of the first liquid to be supplied to the second treatment section for use in the second treatment section.

8. The automatic analyzer according to claim 1, further comprising:
a first liquid containing part that contains the first liquid; and
a pump that delivers the first liquid from the first liquid containing part to the first container,
wherein the first liquid containing part is configured such that the first container can be replenished with the first liquid through replenishment of the first liquid containing part with the first liquid or replacement of the first liquid containing part by a user.

9. The automatic analyzer according to claim 8,
wherein the first liquid containing part and the first container are configured such that, even while the first liquid containing part is being replenished with the first liquid or is being replaced, the first liquid can be supplied from the first container to the first treatment section or the second treatment section.

10. The automatic analyzer according to claim 1,
wherein the first container is configured such that a user can replenish the first container with the first liquid or can replace the first container.
